# EUROPEAN PATENT SPECIFICATION

(11) **EP 3 029 649 B1**
(45) Date of publication and mention of the grant of the patent: **14.03.2018**
(21) Application number: 15195744.6
(22) Date of filing: 20.11.2015
(51) Int. Cl.: G08B 25/00

(54) **SYSTEM AND METHOD FOR TAKE-OVER PROTECTION FOR A SECURITY SYSTEM**
SYSTEM UND VERFAHREN ZUM ÜBERNAHMESCHUTZ FÜR EIN SICHERHEITSSYSTEM
SYSTÈME ET PROCÉDÉ DE PRISE EN CHARGE DE PROTECTION POUR UN SYSTÈME DE SÉCURITÉ

(30) Priority: 02.12.2014 US 201414557733
(43) Date of publication of application: 08.06.2016
(73) Proprietor: Honeywell International Inc., Morris Plains, NJ 07950 (US)
(72) Inventor: ESKILDSEN, Kenneth G., Morris Plains, NJ 07950 (US); OKEEFE, Mark Douglas, Morris Plains, NJ 07950 (US); MARSHALL, Doug, Morris Plains, NJ 07950 (US)
(74) Representative: Houghton, Mark Phillip

(56) References cited:
- US-A- 5 907 279
- US-A1- 2013 009 775
- US-B1- 7 728 724
- US-B1- 8 456 278

## Description

The application pertains to regional monitoring or control systems. More particularly, the application pertains to security or ambient condition monitoring systems wherein system components, detectors or control elements, limit their communications to known, or pre-determined system control units.

### BACKGROUND

Security dealers provide security systems to protect people's lives and property. There are various segments to the security business market, ranging from high end installations to basic, low-cost solutions. The basic, low-cost solution is usually offered to the consumer at a cost lower than the cost of the security equipment, with the expectation that the cost will be recovered via the monthly monitoring fee. Problems arise when a competing security dealer offers the consumer a lower monthly monitoring fee and "takes over" the installed security equipment.

"Taking over" a security system saves the competitor the time and expense of installing the security system. The process of "taking over" a security system involves removing the existing control panel, installing a new control panel, and configuring the control panel to accept signals from the existing security sensors. Hence, the savings are realized by the reuse of the existing sensors that were provided by the original security dealer.

US8456278B1 discloses techniques that enable a wireless security system that is designed to detect and receive wireless transmissions in one protocol, to use sensor-transmitters that operate in a different protocol. The techniques involve the use of an integration device, and in some implementations, first enrolling sensor-transmitters of a first protocol into the integration device, along with device type information for the sensor-transmitters. Thereafter, during system operation, transmissions with message packets in the first message packet protocol are received by the integration device, recognized as having been previously enrolled, and a message packet in a second message packet protocol that includes device type information is then formulated and transmitted by the integration device, for receipt by a system control device for the wireless security system.

### SUMMARY

The present invention provides a method according to claim 1 of the appended claims.

The invention further provides an apparatus according to claim 7 of the appended claims.

### BRIEF DESCRIPTION OF THE DRAWINGS

Fig. 1 is a block diagram of a sy6stem in accordance herewith; and
Fig. 2 is a flow diagram in accordance herewith.

### DETAILED DESCRIPTION

While disclosed embodiments can take many different forms, specific embodiments hereof are shown in the drawings and will be described herein in detail with the understanding that the present disclosure is to be considered as an exemplification of the principles hereof, as well as the best mode of practicing same, and is not intended to limit the claims hereof to the specific embodiment illustrated.

In embodiments hereof, the problem is solved by pairing members of a plurality of system modules, such as security sensors, control elements or ambient condition detectors with a system control panel, or system control circuits. In a disclosed embodiment, the modules, for example, the sensors, control elements or detectors, without limitation, will only communicate with the system control circuits provided by the security dealer that installed the entire system.

Should a competing dealer try to "take over" the system by removing the control circuits, or, panel, the existing modules, whether they be implemented as sensors, ambient condition detectors or control elements will not communicate with the new control system, or, panel. Therefore, the entire system (panel and modules) will need to be replaced to take over the system.

In one aspect hereof, only an authorized user can remove a sensor, detector, or, peripheral from the security system and reuse it with a different security system.

An authorized user can be the dealer, installer or other person assigned by the dealer (perhaps the end user.) There are many ways to determine if a user is "authorized" such as the use of an authorized user code, biometric identifier, password, etc. Once the user is authenticated the removal and reuse of the respective module is permitted.

In a disclosed embodiment, two-way RF modules are coupled to an integral RF modular network identifier (ID). The network ID is derived from, for example, a MAC address that is stored in the control panel. This MAC address is unique to the control panel and in the domain of MAC addresses. Other identifiers can be used without departing from the scope of the present invention.

When a module is enrolled into the control panel, the control panel provides the network ID to that module. The network ID is stored in non-volatile memory in the module. Whenever the module communicates with the control panel, it verifies the network ID of the panel. If the received ID does not match the pre-stored ID, the module will cease communications with that panel.

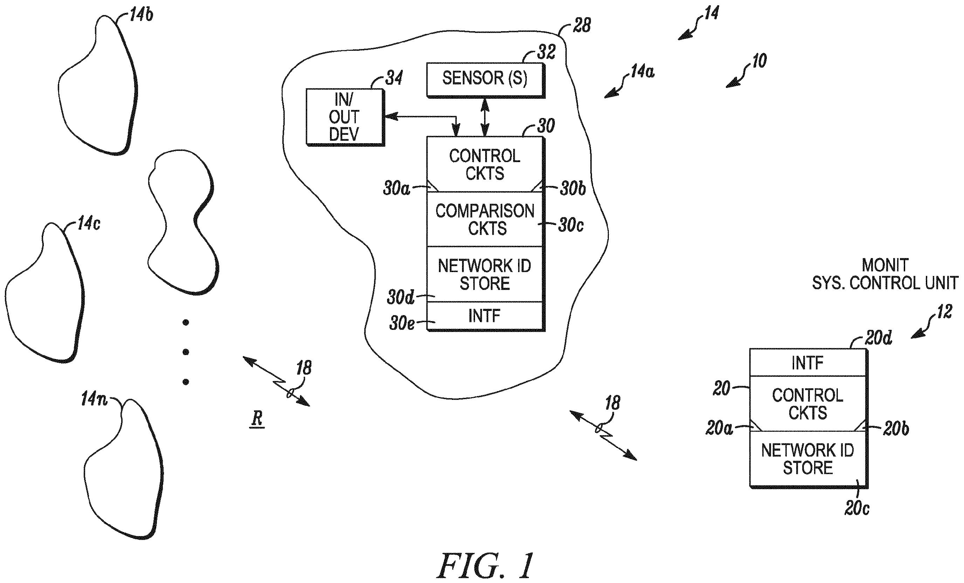

Fig. 1 illustrates a monitoring system 10 which has a local control unit 12. A plurality of modules 14 can be in bidirectional wired, or, wireless RF communications with the control unit 12. Members of the plurality 14, such as 14a, 14b...14n can be installed throughout a region R of interest. Members of the plurality 14 can include, without limitation, motion detectors, position detectors, glass break detectors, smoke detectors, flame detectors, gas detectors, thermal detectors, door access control modules, and authorizing modules.

Control unit 12, and members 14a, 14b ...14n of the plurality of modules 14 can be in bidirectional communication as would be understood by those of skill in the art. The communications medium, 18, can be wired or wireless, without limitation.

Control unit, or panel, 12 can include control circuits 20 which can be implemented, at least in part with one or more programmable processors 20a and associated, executable control software, or instructions 20b.

A unique network identifier 20c can be assigned to system 10 and stored in non-volatile storage 20c. An input/output wired or wireless interface 20d can also be coupled to the control circuits 20.

Module 14a is representative of the members of the plurality 14. A discussion of module 14a will also suffice for a discussion of the remaining members of the plurality 14.

Module 14a includes a housing 28 which can be mounted to a wall ceiling, floor or the like without limitation depending on the characteristic thereof. The particular mounting arrangement is not a limitation hereof.

Housing 28 can carry control circuits 30 which can be be implemented at least in part with one or more programmable processors 30a in combination with pre-stored, executable control instructions 30b. The control circuits 30 are coupled to comparison circuits 30c, and to a non-volatile network identification storage unit 30d. The control circuits 30 are also coupled to a wired, or wireless communications interface 30e to implement bidirectional communications with the unit 12 via medium 18.

Control circuits 30 are also coupled to one or more sensors 32 and/or one or more input/output devices 34. The devices 32, 34 can be selected from a class which includes at least motion detectors, position detectors, glass break detectors, smoke detectors, flame detectors, gas detectors, thermal detectors, door access control modules, solenoid modules, and authorizing modules, all without limitation.

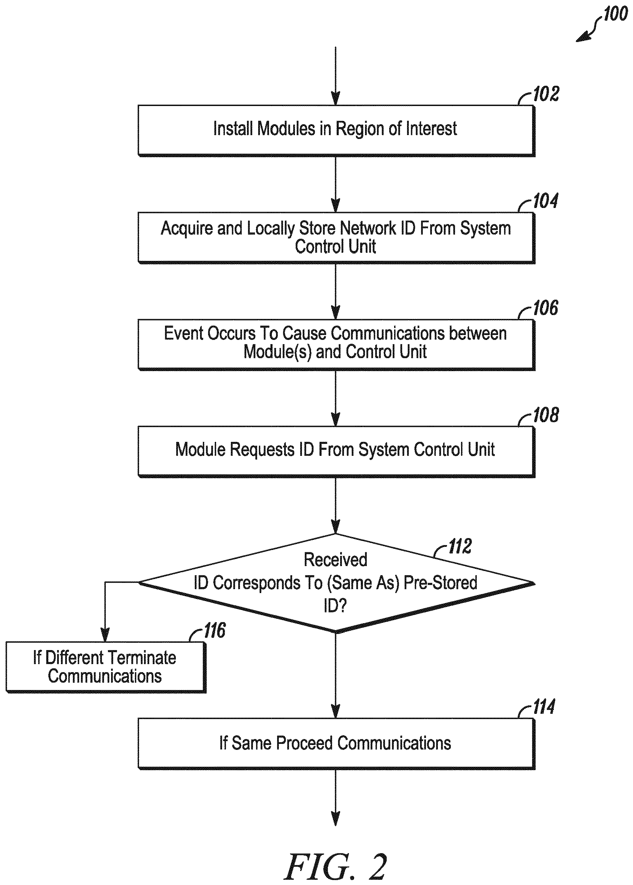

Fig. 2 illustrates aspects of a method 100 of operating system 10. The various modules 14 can be initially installed in region R as required, as at 102. The following method is representative of processing in connection with a group of modules 14 in an initial system installation, or replacement of a single module after installation.

Each of the modules 14 acquires and locally stores a network identifier, obtained from control unit 12, and stored locally at unit 30c, as at 104. When an event occurs that causes communications to occur between one more members of the plurality 14 and the control unit 12, as at 106, each respective module requests that the control unit 12 transmit a copy of the system identifier, stored, for example at storage element 20c, as at 108.

The system identifier received at the module 14a, from the control unit 12 is compared to the pre-stored identifier, at 30d using comparison circuits 30c, as at 112. If the pre-stored identifier from unit 30c corresponds to, or is the same as the received identifier, as at 112, the communications proceed as at 114. If not, communications are either not initiated or terminated as at 116. It will be understood that neither the details as to how the pre-stored identifier is represented at the unit 14a nor the exact details of the comparison with the pre-stored identifier and the received identifier are limitations hereof.

As those of skill in the art will understand, there will be various ways for the installer to manage the network ID so that sensors can be removed, replaced or repurposed. However, this capability will only be available via secure communications by the dealer that installed the equipment.

Alternate methods may achieve the goal of pairing a module, or, sensor with a security system and only allowing authorized users to repurpose a sensor. Such other systems, or, methods that achieve the same result come within the scope of the present invention.

In summary the sensors, or detectors, are manufactured in a default state. This state enables the sensor to be enrolled with any compatible security system. Once the sensor has been enrolled with a panel it is no longer in the default state and it will only work with the panel that it has been enrolled with. To repurpose, that is to enroll the sensor with a different panel it will need to be reset to the default state. Only authorized users can reset the sensors into the default state.

During implementation, for example, during the first 24 hours after enrollment, the enrolled sensors can be defaulted at the system control panel by anyone, not just an authorized user. This feature provides a way to deal with enrollment mistakes; when a sensor is enrolled with the wrong control panel.

Panel replacement, if the control panel malfunctions and needs to be replaced, a process is available for an authorized user to replace the control panel and all of the sensors will change their allegiance to the new panel.

From the foregoing, it will be observed that numerous variations and modifications may be effected without departing from the scope of the invention. It is to be understood that no limitation with respect to the specific apparatus illustrated herein is intended or should be inferred. It is, of course, intended to cover by the appended claims all such modifications as fall within the scope of the claims.

Further, logic flows depicted in the figures do not require the particular order shown, or sequential order, to achieve desirable results. Other steps may be provided, or steps may be eliminated, from the described flows, and other components may be added to, or removed from the described embodiments.

## Claims

1. A method comprising:
establishing a selected system (10), and, providing (102) a plurality of modules (14) in the system each of which communicates with a least a monitoring system control panel (12);
providing a control panel identifier that is made available to at least some of the members (14a, 14b ... 14n) of the plurality of modules (14);
storing (104) the control panel identifier in non-volatile storage (30d) at respective members (14a, 14b ...14n) of the plurality of modules (14);
requesting (108), by at least one of the plurality of modules (14), that the monitoring system control panel (12) communicate the control panel identifier to the at least one of the plurality of modules (14);
receiving, by the at least one of the plurality of modules (14), the control panel identifier and comparing (112) the received control panel identifier with a pre-stored identifier; and
initiating communications (114) with the monitoring system control panel (12) only if the control panel identifier matches the stored identifier.

2. A method as in claim 1 that includes providing a plurality of ambient condition detectors (32), and evaluating the control panel identifier at the detectors (32) before initiating communications with a monitoring system control panel (12).

3. A method as in claim 1 that includes selecting modules from a class which includes at least motion detectors, position detectors, glass break detectors, smoke detectors, flame detectors, gas detectors, thermal detectors, door access control modules, and authorizing modules.

4. A method as in claim 1 that includes providing non-volatile storage (30d) at the members of the plurality of modules (14).

5. A method as in claim 4 that includes providing wireless communications (18) between at least some members of the plurality of modules (14) and the monitoring system control panel (12).

6. A method as in claim 3 that includes providing wireless transceivers (20d, 30e) in at least some of the modules (14), and in the monitoring system control panel (12).

7. An apparatus comprising:
a communications system (10) having a plurality of modules (14) each of which communicate with at least a system control unit (12);
a predetermined identifier associated with the system control unit (12);
a storage element (30d) at each of the modules (14); and
circuitry (20) at the system control unit (12) to send the identifier to each of the modules (14) for storage in the respective storage element (30d), wherein each module (14) requests the identifier from the system control unit (12) prior to communicating with the system control unit (12),
wherein each module (14) includes circuitry (30c) to compare a received, requested identifier, to an identifier pre-stored in the storage element (30d) of each module (14), and wherein communications with the system control unit (12) are not initiated where a received identifier differs from the identifier stored in the respective module (14).

8. An apparatus as in claim 7 wherein members of the plurality of modules (14) are selected from a class that includes, at least, motion detectors, position detectors, glass break detectors, smoke detectors, flame detectors, gas detectors, thermal detectors, door access control modules, and authorizing modules.

9. An apparatus as in claim 7 where the system (10) is a regional monitoring system and the identifier is associated with the system control unit (12).

10. An apparatus as in claim 9 wherein the modules (14) of the system will not communicate with a system control unit (12) that has an identifier different from the stored identifier at a respective module (14).

11. An apparatus as in claim 7 where the system (10) is selected from a class which includes at least a heating ventilating and air conditioning system, a fire detection system, a gas detection system, or a security monitoring system.

## Patentansprüche

1. Verfahren, umfassend:
Einrichten eines ausgewählten Systems (10) und Bereitstellen (102) einer Vielzahl von Modulen (14) in dem System, von denen jedes mit mindestens einem Überwachungssystem-Steuerfeld (12) kommuniziert;
Bereitstellen einer Steuerfeldkennung, die mindestens einigen der Elemente (14a, 14b ... 14n) der Vielzahl von Modulen (14) zur Verfügung gestellt wird;
Speichern (104) der Steuerfeldkennung in einem nicht flüchtigen Speicher (30d) an den jeweiligen Elementen (14a, 14b ... 14n) der Vielzahl von Modulen (14);
Anfordern (108), durch mindestens eines der Vielzahl von Modulen (14), dass das Überwachungssystem-Steuerfeld (12) die Steuerfeldkennung an das mindestens eine der Vielzahl von Modulen (14) kommuniziert;
Empfangen, durch das mindestens eine der Vielzahl von Modulen (14), der Steuerfeldkennung und Vergleichen (112) der empfangenen Steuerfeldkennung mit einer zuvor gespeicherten Kennung; und
Einleiten von Kommunikationen (114) mit dem Überwachungssystem-Steuerfeld (12) nur dann, wenn die Steuerfeldkennung mit der gespeicherten Kennung übereinstimmt.

2. Verfahren nach Anspruch 1, welches das Bereitstellen einer Vielzahl von Umgebungsbedingungsdetektoren (32) und das Auswerten der Steuerfeldkennung an den Detektoren (32) vor dem Einleiten von Kommunikationen mit einem Überwachungssystem-Steuerfeld (12) einschließt.

3. Verfahren nach Anspruch 1, welches das Auswählen von Modulen aus einer Klasse einschließt, die mindestens Bewegungsdetektoren, Positionsdetektoren, Glasbruchdetektoren, Rauchdetektoren, Flammendetektoren, Gasdetektoren, Wärmedetektoren, Zugangssteuerungsmodule für Türen und Zugangsberechtigungsmodule einschließt.

4. Verfahren nach Anspruch 1, welches das Bereitstellen eines nicht flüchtigen Speichers (30d) an den Elementen der Vielzahl von Modulen (14) einschließt.

5. Verfahren nach Anspruch 4, welches das Bereitstellen von drahtlosen Kommunikationen (18) zwischen mindestens einigen Elementen der Vielzahl von Modulen (14) und dem Überwachungssystem-Steuerfeld (12) einschließt.

6. Verfahren nach Anspruch 3, welches das Bereitstellen von drahtlosen Transceivern (20d, 30e) in mindestens einigen der Modulen (14) und in dem Überwachungssystem-Steuerfeld (12) einschließt.

7. Vorrichtung, umfassend:
ein Kommunikationssystem (10) mit einer Vielzahl von Modulen (14), von denen jedes mit mindestens einer Systemsteuereinheit (12) kommuniziert;
eine vorbestimmte Kennung, die der Systemsteuereinheit (12) zugeordnet ist;
ein Speicherelement (30d) an jedem der Module (14); und
eine Schaltung (20) an der Systemsteuereinheit (12) zum Senden der Kennung an jedes der Module (14) zum Speichern in dem jeweiligen Speicherelement (30d), wobei jedes Modul (14) die Kennung von der Systemsteuereinheit (12) vor der Kommunikation mit der Systemsteuereinheit (12) anfordert,
wobei jedes Modul (14) eine Schaltung (30c) zum Vergleichen einer empfangenen angeforderten Kennung mit einer zuvor in dem Speicherelement (30d) jedes Moduls (14) gespeicherten Kennung einschließt, und wobei die Kommunikationen mit der Systemsteuereinheit (12) nicht eingeleitet werden, wenn eine empfangene Kennung von der Kennung abweicht, die in dem jeweiligen Modul (14) gespeichert ist.

8. Vorrichtung nach Anspruch 7, wobei Elemente der Vielzahl von Modulen (14) aus einer Klasse ausgewählt sind, die mindestens Bewegungsdetektoren, Positionsdetektoren, Glasbruchdetektoren, Rauchdetektoren, Flammendetektoren, Gasdetektoren, Wärmedetektoren, Zugangssteuerungsmodule für Türen und Zugangsberechtigungsmodule einschließt.

9. Vorrichtung nach Anspruch 7, wobei das System (10) ein regionales Überwachungssystem ist und die Kennung der Systemsteuereinheit (12) zugeordnet ist.

10. Vorrichtung nach Anspruch 9, wobei die Module (14) des Systems nicht mit einer Systemsteuereinheit (12) kommunizieren, die eine Kennung aufweist, die sich von der gespeicherten Kennung an einem jeweiligen Modul (14) unterscheidet.

11. Vorrichtung nach Anspruch 7, wobei das System (10) aus einer Klasse ausgewählt ist, die mindestens ein Heizventilations- und Klimaanlagensystem, ein fest installiertes Erfassungssystem, ein Gasdetektionssystem oder ein Sicherheitsüberwachungssystem einschließt.

## Revendications

1. Procédé comprenant :
l'établissement d'un système sélectionné (10), et la fourniture (102) d'une pluralité de modules (14) dans le système qui communiquent chacun avec au moins un panneau de commande de système de surveillance (12) ;
la fourniture d'un identifiant de panneau de commande qui est mis à la disposition d'au moins certains des membres (14a, 14b ... 14n) de la pluralité de modules (14) ;
la mémorisation (104) de l'identifiant de panneau de commande dans une mémoire non volatile (30d) au niveau de membres respectifs (14a, 14b ... 14n) de la pluralité de modules (14) ;
la demande (108), par au moins un de la pluralité de modules (14), que le panneau de commande de système de surveillance (12) communique l'identifiant de panneau de commande à l'au moins un de la pluralité de modules (14) ;
la réception, par l'au moins un de la pluralité de modules (14), de l'identifiant de panneau de commande et la comparaison (112) de l'identifiant de panneau de commande reçu à un identifiant prémémorisé ; et
le lancement de communications (114) avec le panneau de commande de système de surveillance (12) uniquement si l'identifiant de panneau de commande correspond à l'identifiant mémorisé.

2. Procédé selon la revendication 1 qui comporte la fourniture d'une pluralité de détecteurs de condition ambiante (32), et l'évaluation de l'identifiant de panneau de commande au niveau des détecteurs (32) avant le lancement des communications avec un panneau de commande de système de surveillance (12).

3. Procédé selon la revendication 1 qui comporte des modules de sélection d'une classe qui comporte au moins des détecteurs de mouvement, des détecteurs de position, des détecteurs de bris de verre, des détecteurs de fumée, des détecteurs de flamme, des détecteurs de gaz, des détecteurs thermiques, des modules de commande d'accès de porte, et des modules d'autorisation.

4. Procédé selon la revendication 1 qui comporte la fourniture d'une mémoire non volatile (30d) au niveau des membres de la pluralité de modules (14).

5. Procédé selon la revendication 4 qui comporte la fourniture de communications sans fil (18) entre au moins certains membres de la pluralité de modules (14) et le panneau de commande de système de surveillance (12).

6. Procédé selon la revendication 3 qui comporte la fourniture d'émetteurs-récepteurs sans fil (20d, 30e) dans au moins certains des modules (14), et dans le panneau de commande de système de surveillance (12).

7. Système comprenant :
un système de communications (10) comportant une pluralité de modules (14) qui communiquent chacun avec au moins une unité de commande de système (12) ;
un identifiant prédéterminé associé à l'unité de commande de système (12) ;
un élément de mémorisation (30d) au niveau de chacun des modules (14) ; et
des circuits (20) au niveau de l'unité de commande de système (12) pour envoyer l'identifiant à chacun des modules (14) en vue de sa mémorisation dans l'élément de mémorisation respectif (30d), dans lequel chaque module (14) demande l'identifiant à l'unité de commande de système (12) avant de communiquer avec l'unité de commande de système (12),
dans lequel chaque module (14) comporte des circuits (30c) pour comparer un identifiant demandé reçu à un identifiant prémémorisé dans l'élément de mémorisation (30d) de chaque module (14), et dans lequel les communications avec l'unité de commande de système (12) ne sont pas lancées lorsqu'un identifiant reçu diffère de l'identifiant mémorisé dans le module respectif (14).

8. Appareil selon la revendication 7 dans lequel des membres de la pluralité de modules (14) sont sélectionnés dans une classe qui comporte, au moins, des détecteurs de mouvement, des détecteurs de position, des détecteurs de bris de verre, des détecteurs de fumée, des détecteurs de flamme, des détecteurs de gaz, des détecteurs thermiques, des modules de commande d'accès de porte, et des modules d'autorisation.

9. Appareil selon la revendication 7, dans lequel le système (10) est un système de surveillance régional et l'identifiant est associé à l'unité de commande de système (12).

10. Appareil selon la revendication 9, dans lequel les modules (14) du système ne communiquent pas avec une unité de commande de système (12) qui a un identifiant différent de l'identifiant mémorisé au niveau d'un module respectif (14).

11. Appareil selon la revendication 7, dans lequel le système (10) est sélectionné dans une classe qui comporte au moins un système de chauffage, ventilation et climatisation, un système de détection du feu, un système de détection de cases, ou un système de surveillance de sécurité.
